# EUROPÄISCHE PATENTANMELDUNG

(11) **EP 3 292 749 A1**
(43) Veröffentlichungstag der Anmeldung: **14.03.2018**
(21) Anmeldenummer: 17401096.7
(22) Anmeldetag: 24.08.2017
(51) Int. Cl.: A01C 17/00, A01M 7/00

(54) **VERTEILMASCHINE**

(30) Priorität: 09.09.2016 DE 102016116985
(71) Anmelder: Amazonen-Werke H. Dreyer GmbH & Co. KG, 49205 Hasbergen (DE)
(72) Erfinder: Krabbe, Ulrich, 49205 Hasbergen (DE); Lampert, Tobias, 49545 Tecklenburg (DE)

(57) **Zusammenfassung**

Verteilmaschine mit einem Rahmen (1), Vorratsbehälter (2), Dosiereinrichtung (5) und Verteilorganen (6,102), die das auszubringende Material auf der zu bearbeitenden Oberfläche in Form von zumindest einem Materialfächer (13, 103) verteilen, wobei der Verteilmaschine den zumindest einigen Materialfächern (13, 103) wie leuchtende Leuchtmittel (11, 104) zugeordnet sind. Die Leuchtmittel (11, 104) strahlen farbige Lichtstrahlen (12, 107) in Richtung des zumindest einen Materialfächers (13, 103) ab.

## Beschreibung

Die Erfindung betrifft eine Verteilmaschine gemäß des Oberbegriffes des Patentanspruches 1.

Eine derartige Verteilmaschine ist in der DE 10 2013 101 449 A1 beschrieben. Diese Verteilmaschine ist als Zentrifugaldüngerstreuer ausgebildet. An dem Vorratsbehälter des Düngerstreuers sind Leuchtmittel angeordnet, welche in Richtung der von den als Schleuderscheiben ausgebildeten Verteilorganen des Düngerstreuers abgeschleuderten Düngerpartikel in Materialfächer, die auch als Streufächer bezeichnet werden, Lichtstrahlen senden um den Materialfächer zu beleuchten. Hierdurch ist eine einfache optische Kontrolle auch bei Dämmerung und/oder Dunkelheit möglich, ob der Streufächer sich in richtiger Weise ausbildet, um ein gutes Streuergebnis zu erhalten. Es kann so beispielsweise festgestellt werden, ob der Zentrifugalstreuer sich in dem Grenzstreumodus oder im Normalstreumodus befindet. Auch ist hierdurch eine indirekte Überprüfung möglich, ob das Dosierorgan verstopft ist.

Zum Beleuchten des Materialfächers strahlen die Leuchtmittel weiße Lichtstrahlen ab. Durch die weißen Lichtstrahlen wird bei einem entsprechenden Kontrast der Umgebung der hier als Streufächer bezeichnete Materialfächer gut sichtbar. Jedoch wenn die Umgebung hell, insbesondere im Winter durch einen Schneebelag die Oberflächen weiß sind, lässt sich das ausgebrachte Material, also der Streufächer nur schlecht erkennen.

Eine weitere Verteilmaschine ist in der EP 1 961 300 B1 beschrieben. Diese Verteilmaschine ist als Feldspritze ausgebildet und verteilt über die an ein Verteilergestänge angebrachten Verteilerdüsen die auszubringende Flüssigkeit in über den Verteilerdüsen ausgestoßenen Flüssigkeitsfächer. Diese Flüssigkeitsfächer werden von dem Leuchtmittel mittels weißer Lichtstrahlen angestrahlt. In manchen Situationen sind durch die Farbe der Umgebung die durch weiße Lichtstrahlen angestrahlten Flüssigkeitsfächer nur schlecht zu erkennen.

Der Erfindung liegt die Aufgabe zu Grunde, mittels einfacher Maßnahmen hier Abhilfe zu schaffen.

Diese Aufgabe der erfindungsgemäß dadurch gelöst, dass die Leuchtmittel farbige Lichtstrahlen in Richtung des zumindest einen Materialfächers abstrahlen.

Infolge dieser Maßnahme werden die Materialfächer mit farbigen Lichtstrahlen zur Erreichung eines besseren Kontrastes zur Umgebung angestrahlt. Hierdurch sind auch in schwierigen Situationen die Materialfächer aufgrund des durch die farbigen Lichtstrahlen erzeugten Kontrastes gut zu erkennen.

Je nach Umgebungsbedingungen werden zur Erreichung eines optimierten Kontrastes zwischen der Farbe der Umgebung und der Farbe des Materialfächers entsprechend geeignete farbige Lichtstrahlen erzeugende Leuchtmittel eingesetzt.

Entsprechend den jeweiligen Bedingungen strahlen die Leuchtmittel rote, blaue, grüne, gelbe oder orange Lichtstrahlen ab.

Es kommen also die Leuchtmittel, die in einen starken Kontrast zu den Umgebungsbedingungen entsprechend angepasste Lichtstrahlen abstrahlen, zum Einsatz. Somit sind die Materialfächer gut oder zumindest in optimierter Weise im Rahmen aller Umgebungsbedingungen sichtbar.

Weiterhin ist es möglich, dass die von den Leuchtmitteln abgestrahlten Lichtstrahlen in Richtung des zumindest einen Materialfächers nach festgelegten Bedingungen als wechselnde Farben abgestrahlt werden.

Die erfindungsgemäßen farbigen Lichtstrahlen lassen sich bei Verteilmaschinen, die als Zentrifugalstreuer mit zumindest einem Vorratsbehälter zur Aufnahme von zu verteilendem, körnigem Material, der in seinem unteren Bereich zumindest ein Dosierorgan mit zumindest einem zugeordneten Einstellelement aufweist, ausgebildet sind, einsetzen, wobei der Verteilmaschine zumindest Teile der Verteilmaschine an- und/oder beleuchtende Leuchtmittel zugeordnet sind, wobei unterhalb des zumindest einen Dosierorgans zumindest eine die von dem zumindest einem Dosierorgan dosierten Materialien in Breitverteilung und in Form eines Streufächers abschleudernde und rotierend angetriebene und mit Wurfschaufeln besetzte Schleuderscheibe angeordnet ist, dass das zumindest eine Leuchtmittel derart ausgestaltet und/oder ausgerichtet ist, wobei die von dem zu einem Leuchtmittel abstrahlenden Lichtstrahlen die von den Wurfschaufeln in einem Streufächer abgeschleuderten Materialpartikel zumindest teilweise an-und/oder beleuchten.

Die erfindungsgemäßen farbigen Lichtstrahlen lassen sich weiterhin bei Verteilmaschinen, die als Feldspritze mit einem Rahmen, Vorratsbehälter, Dosiereinrichtungen und an einem Verteilergestänge beabstandet zueinander angeordneten Verteilerdüsen ausgebildet ist, einsetzen, wobei zumindest einigen der Verteilerdüsen eine von den von den Verteiler diesen ausgestoßenen Flüssigkeitsfächer beleuchtendes Leuchtmittel ausgebildet ist.

In bevorzugter Weise ist vorgesehen, das jeweilige Leuchtmittel eine Leuchtdiode, wie LED ist.

Außerdem erhöhen die die farbigen Lichtstrahlen erzeugenden Leuchtmittel auf der Rückseite oder seitlich der Maschine die Sicherheit im Straßenverkehr.

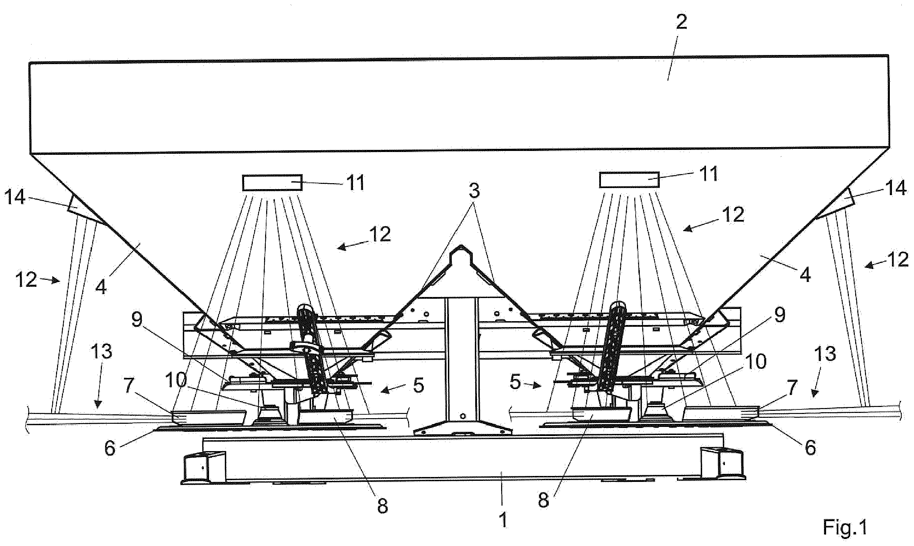

Weitere Einzelheiten der Erfindung sind der Beispielsbeschreibung und den Zeichnungen zu entnehmen. Die Zeichnungen zeigen
- Fig.1: eine als Schleuderstreuer ausgebildete Verteilmaschine in der Ansicht von hinten,
- Fig. 2: ein Segment eines Spritzgestänges eines Verteilergestänges einer als Feldspritze ausgebildeten Verteilmaschine mit den von den Spritzdüsen ausgestoßenen Spritzfächern in Prinzipdarstellung in der Ansicht von hinten,
- Fig. 3: das Gestängesegment nach Fig. 4 mit den beleuchteten Spritzfächern in Prinzipdarstellung,
- Fig. 4: die Ausbildung eines Spritzfächers mit Leuchtkegel am Beispiel eines Düsenkörpers in perspektivischer Darstellung von seitlich hinten gesehen,
- Fig. 5: die Ausbildung eines Spritzfächers mit Leuchtkegel am Beispiel eines Düsenkörpers in perspektivischer Darstellung von seitlich hinten gesehen,
- Fig. 6: das Gestängesegment nach Fig. 2 mit beleuchteten Spritzfächern in Prinzipdarstellung,
- Fig. 7: die Ausbildung eines Spritzfächers mit Leuchtkegel am Beispiel eines Düsenkörpers nach Fig. 6 in perspektivischer Darstellung.

Der Schleuderdüngerstreuer weist einen Rahmen 1 und einen Vorratsbehälter 2 auf. Auf der Vorderseite des Rahmens 1 sind in bekannter und daher nicht näher dargestellter Weise Dreipunktkupplungselemente zum Anbau an einen Schlepperkraftheber angeordnet. Der Vorratsbehälter 2 weist in seinem unteren Bereich die beiden durch das dachförmige Mittelteil 3 voneinander getrennten Auslauftrichter 4 auf. Die Auslauftrichter 4 sind jeweils durch ein Dosierorgan 5 abgeschlossen. Unterhalb der Dosierorgane 5 ist jeweils eine rotierend angetriebene Schleuderscheibe 6 angeordnet. Die Dosierorgane 5 leiten das sich im Vorratsbehälter 2 befindliche zu verteilende Material in einstellbaren Mengen den Schleuderscheiben 6 zu. Auf den Schleuderscheiben 6 sind Wurfschaufeln 7 und 8 angeordnet, welche das ihnen zugeleitete Material in Bereitverteilung auf der Bodenoberfläche verteilen. Dem Dosierorgan 5 ist jeweils ein Einstellmittel 9 zum Einstellen des Dosierorgans 5 zugeordnet. Damit kann das der Schleuderscheibe 6 zu dosierte Material, welches sich im Vorratsbehälter 2 befindet, in der jeweiligen Menge entsprechend eingestellt werden.

Jede Schleuderscheibe 6 ist über eine an einer nicht dargestellten Lagerwelle befestigte Nabe 10 angeordnet. Die Lagerwelle ist mittels einer nicht dargestellten Lageranordnung am Rahmen 1 drehbar gelagert und wird über einen bekannten und daher nicht dargestellten motorischen Antrieb rotierend angetrieben.

An der Verteilmaschine sind zumindest Teile der Verteilmaschine an- oder beleuchtende Leuchtmittel 11 zugeordnet. Diese Leuchtmittel 11 können als zumindest eine LED-Lichtquelle ausgebildet sein. Es ist auch möglich, anstelle dieser Leuchtmittel anders ausgestaltete Leuchtmittel, beispielsweise Halogenleuchten einzusetzen. Diese Leuchtmittel 11 sind derart ausgestaltet und/oder ausgerichtet, dass sie das Dosierorgan 5 und das diesem Dosierorgan 5 zugeordnete Stellelement 10 an- und/oder beleuchten.

Die von dem Leuchtmittel 11 abstrahlenden Lichtstrahlen 12 leuchten das Dosierorgan 5 und dessen Umgebung aus. Weiterhin werden das Einstellmittel 9 des Stellelementes zum Einstellen des Dosierorgans 5 und dessen Umgebung ausgeleuchtet. Hierdurch kann das Dosierorgan auch bei Dunkelheit entsprechend eingestellt werden. Ebenfalls kann so bei Dunkelheit die Einstellung und Funktionsweise des Dosierorgans 5 überprüft werden.

Weiterhin sind die Leuchtmittel 11 so angeordnet, dass sie die Schleuderscheiben 6 und die darauf angeordneten Wurfschaufeln 7 und 8 an- und/oder beleuchten. Somit kann die Funktionsweise der Wurfschaufeln 7 und 8 und das Einleiten des Materiales von dem Dosierorgan 5 in die Wurfschaufeln 7 und 8 auch bei Dunkelheit visuell überprüft werden.

Somit ist eine verbesserte Kontrolle und Erleichterung der Einstellung des Steuers auch bei Dunkelheit gegeben. Auch kann diese Beleuchtung bei der Wartung der Steuorgans genutzt werden.

Weiterhin Strahlen in die Lichtstrahlen 12 der Leuchtmittel 11 den Streufächer 13, der von den von den Wurfschaufeln 7 und 8 in Breitverteilung abgeschleuderten Materialpartikel gebildet wird, an. Somit wird auf der Streufächer 13 von den Lichtstrahlen 12 der Leuchtmittel 11 ange- und/oder beleuchtet.

Die von den Leuchtmitteln 11 und 14 abstrahlenden Lichtstrahlen 12 beleuchten die von den Wurfschaufeln 7, 8 in einem Streufächer 13 abgeschleuderten Materialpartikel. Hierzu sind die von den Lichtmitteln 11 und 14 abstrahlenden Lichtstrahlen 12 so gebündelt und/oder begrenzt sind, dass sie den Streufächer 13 zumindest teilweise durchdringen. Die Lichtstrahlen 12 treffen so auf den Streufächer 13 auf, dass ein Winkel zwischen 30 und 150°, vorzugsweise 60 und 120° zwischen den Lichtstrahlen 12 und dem Streufächer 13 vorhanden ist.

Weiterhin kann den Lichtmitteln 11 ein nicht dargestellter Helligkeitssensor zugeordnet sein, welche die Lichtmittel bei einem festgelegten Helligkeitswert ein-und/oder ausschaltet. Somit wird also bei einsetzender Dämmerung oder Dunkelheit das jeweilige Lichtmittel 11 automatisch eingeschaltet und bei entsprechender Helligkeit wieder ausgeschaltet.

Weiterhin sind noch die Lichtmittel 14 an der Verteilmaschine angeordnet. Die Lichtstrahlen 12 dieser Lichtmittel 14 strahlen den Streufächer 13 bzw. die sich in dem Streufächer 13 befindlichen abgeschleuderten Materialpartikel an, so dass diese auch bei Dunkelheit sichtbar sind.

Durch das Anstrahlen der abgeschleuderten Materialpartikel des Streufächers 13 ist so eine optische Kontrolle auch bei Dunkelheit möglich. Es ist so auch bei Dunkelheit zu überprüfen, ob der Streuer das auszubringende Material in richtiger Weise ausbringt. Auch kann eine optische Kontrolle bei Dunkelheit durchgeführt werden, ob das Dosierorgan 5 korrekt arbeitet bzw. verstopft ist.

Die Leuchtmittel 11 strahlen farbige Lichtstrahlen 12 in Richtung des zumindest einen Materialfächers 13 ab. Hierdurch werden die Materialfächer 13 mit farbigen Lichtstrahlen 12 zur Erreichung eines besseren Kontrastes zur Umgebung angestrahlt. Somit sind auch in schwierigen Situationen die Materialfächer 13 aufgrund des durch die farbigen Lichtstrahlen 12 erzeugten Kontrastes gut zu erkennen. Es werden je nach Umgebungsbedingungen zur Erreichung eines optimierten Kontrastes zwischen der Farbe der Umgebung und der Farbe des Materialfächers 13 entsprechend geeignete farbige Lichtstrahlen 12 erzeugende Leuchtmittel 11 eingesetzt.

So lassen sich entsprechend den jeweiligen Bedingungen entsprechend geeignete Leuchtmittel 12 einsetzen, so dass je nach Einsatzfall und/oder Umgebungsbedingungen die Leuchtmittel 12 rote, blaue, grüne, gelbe oder orange Lichtstrahlen 13 abstrahlen.

Es kommen also die Leuchtmittel 11, die in einen starken Kontrast zu den Umgebungsbedingungen entsprechend angepasste Lichtstrahlen 12 abstrahlen, zum Einsatz. Somit sind die als Streufächer 13 bezeichneten Materialfächer gut oder zumindest in optimierter Weise im Rahmen aller Umgebungsbedingungen sichtbar.

In einigen Fällen ist es sinnvoll, dass die von den Leuchtmitteln 12 abgestrahlten Lichtstrahlen 13 in Richtung des zumindest einen Materialfächers 13 nach festgelegten Bedingungen als wechselnde Farben abgestrahlt werden.

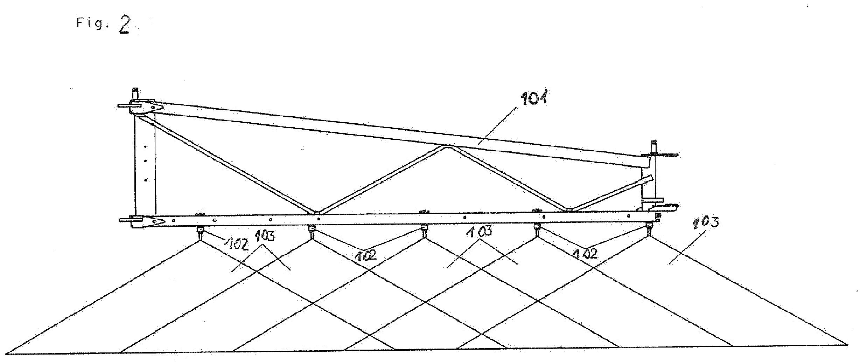

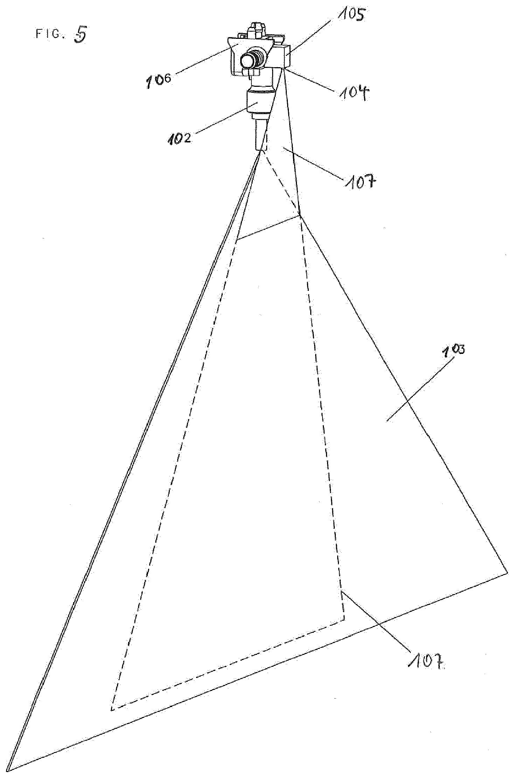

In den Fig.2 bis 7 wird eine erfindungsgemäße Ausstattung bei einer als Feldspritze ausgebildeten Verteilmaschine erläutert:
Die nicht dargestellte Feldspritze weist einen Rahmen, Vorratsbehälter, Dosiereinrichtung und ein Verteilergestänge auf. Das Verteilergestänge weist mehrere zueinander ein- und ausfaltbare Segmente auf. In Fig.2 ist ein Segment 101 dargestellt. An den Segmenten 101 des Verteilergestänges sind beabstandet zueinander mehrere Verteilerdüsen 102 angeordnet. Diesen Verteilerdüsen 102 werden über nicht dargestellte Leitungen über die nicht dargestellte Dosiereinrichtung die sich im Vorratsbehälter befindlichen auszubringenden Flüssigkeiten zugeführt. Diese Flüssigkeiten werden von den Verteilerdüsen oder Spritzdüsen 102 in Form der einander sich überlappenden Spritzfächer 103 ausgebracht, wie in Fig.2 dargestellt ist.

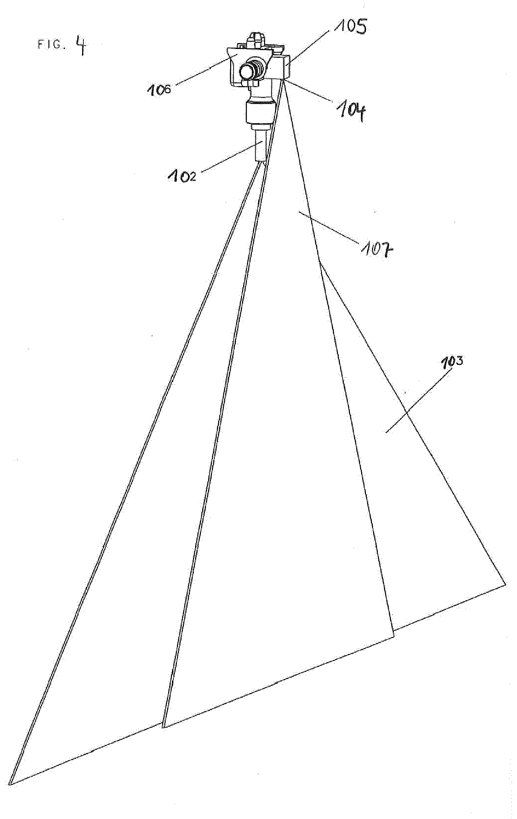

Während der Ausbringarbeit wird den Spritzdüsen 102 Flüssigkeit unter Druck zugeleitet. Der aus den Düsenöffnungen der Düsen 102 austretende Flüssigkeitsstrom wird durch die Düsen in Tröpfchen zersträubt und tritt in Form der in Fig.2 dargestellten Spritzfächer 103 aus. Um diese Spritzfächer 103 nun bei Dunkelheit oder in der Dämmerung für den Fahrer in einfacher Weise sichtbar zu machen, sind im Bereich der Verteilerdüsen 102 an diesen Lichtquellen 104 angebracht, wie die Fig. 4 zeigt. Diese Lichtquellen 104 sind als Leuchtdioden (LED) ausgebildet. Die Leuchtdioden 104 können in einem separaten Gehäuse 105 zu dem Gehäuse 106 der Verteilerdüsen 102 wie in Fig.4, oder in dem Gehäuse 106 der Verteilerdüse 105 in integrierter Weise angeordnet sein. Die Energieversorgung der Leuchtdioden 104 findet in nicht dargestellter Weise durch separat zu den den Verteilerdüsen 102 führenden Versorgungsleitung als Spannungsleitung ausgebildete Leitungen statt. Auch können den Verteilerdüsen 102 Schalteinrichtungen zugeordnet sein, die über ein Bus-System, wie beispielsweise CAN-Bus ansteuerbar sind. Die Steuerung der Beleuchtung der LED's 104 erfolgt dann über das Bus-System, beispielsweise über den CAN-Bus.

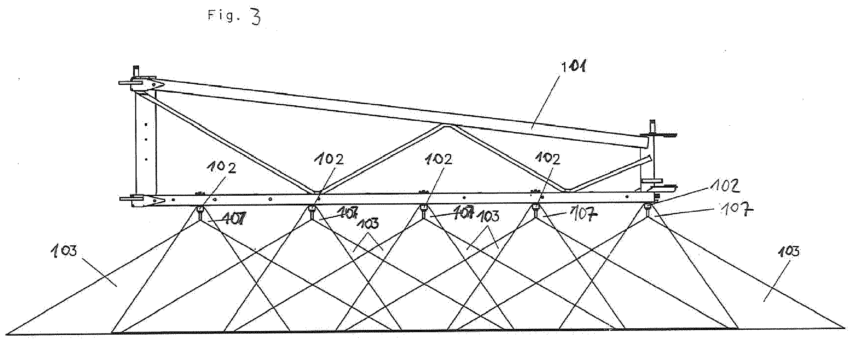

Die LED's 104 strahlen die Lichtstrahlen in Form eines Lichtkegel 107 ab. Der Lichtkegel 107 entsprechend Fig.4 ist parallel zu dem Flüssigkeitsfächer 103 ausgerichtet. Hierbei ist die Lichtquelle 104 entweder vor oder hinter dem Flüssigkeitsfächer 103 angeordnet, so dass der Fahrer den Flüssigkeitsfächer 103 erkennen kann. Durch die Beleuchtung der Spritzfächer 103 kann der Fahrer feststellen, ob aus jeweiligen Düsen Flüssigkeit ausgebracht wird. Darüber hinaus kann der Fahrer erkennen, wie weit das Spritzgestänge jeweils nach außen reicht. Wie die Fig.3 und Fig.4 zeigen, ist der Lichtkegel 107 kleiner als der Streufächerkegel 103 ausgebildet.

Entsprechend Fig. 4 ist gezeigt, dass der Lichtkegel 107 so ausgerichtet ist, dass er den Flüssigkeitsfächer 103 schneidet und hierdurch eine bessere Beleuchtung des Flüssigkeitsfächers 103 auch für sich schlecht beleuchtende lassende Flüssigkeitsfächer 103 möglich ist.

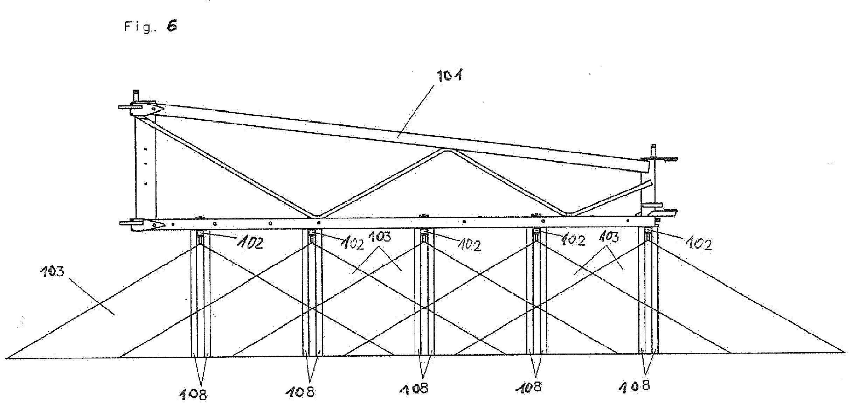

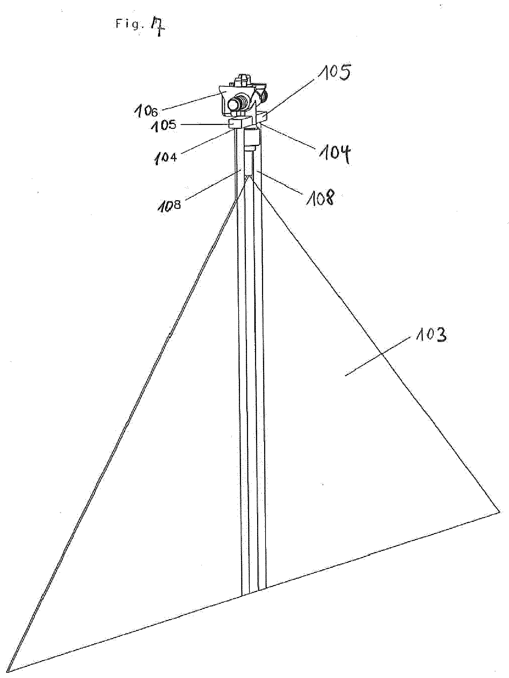

Nach dem Ausführungsbeispiel der Fig. 6 und 7 sind die Lichtquellen 104, hier LED's fluchtend zu den Verteilerdüsen 102 angeordnet, wobei jeder Verteilerdüse 102 zwei Leuchtdioden 102 zugeordnet sind. Es ist jeweils eine Leuchtdiode 104 auf jeder Seite der Verteilerdüsen 102 angeordnet. Hierdurch schneiden die Lichtstrahlen 108 der Leuchtdiode 104 ebenfalls wiederum die Spritzfächer 103 hierdurch werden diese beleuchtet und sind von dem Fahrer entsprechend sichtbar, so dass er feststellen kann, ob aus der jeweiligen Düse Flüssigkeit ausgebracht wird. Darüber hinaus kann er erkennen, wie weit das Spritzgestänge jeweils nach außen ragt.

Die Leuchtmittel 104 strahlen farbige Lichtstrahlen 107 in Richtung des zumindest einen Materialfächers 103 ab. Hierdurch werden die Materialfächer 103 mit farbigen Lichtstrahlen 107 zur Erreichung eines besseren Kontrastes zur Umgebung angestrahlt. Somit sind auch in schwierigen Situationen die Materialfächer 103 aufgrund des durch die farbigen Lichtstrahlen 107 erzeugten Kontrastes gut zu erkennen. Es werden je nach Umgebungsbedingungen zur Erreichung eines optimierten Kontrastes zwischen der Farbe der Umgebung und der Farbe des Materialfächers 103 entsprechend geeignete farbige Lichtstrahlen 107 erzeugende Leuchtmittel 104 eingesetzt.

So lassen sich entsprechend den jeweiligen Bedingungen entsprechend geeignete Leuchtmittel 107 einsetzen, so dass je nach Einsatzfall und/oder Umgebungsbedingungen die Leuchtmittel 107 rote, blaue, grüne, gelbe oder orange Lichtstrahlen 107 abstrahlen.

Es kommen also die Leuchtmittel 104, die in einen starken Kontrast zu den Umgebungsbedingungen entsprechend angepasste Lichtstrahlen 107 abstrahlen, zum Einsatz. Somit sind die als Streufächer 103 bezeichneten Materialfächer gut oder zumindest in optimierter Weise im Rahmen aller Umgebungsbedingungen sichtbar.

In einigen Fällen ist es sinnvoll, dass die von den Leuchtmitteln 104 abgestrahlten Lichtstrahlen 107 in Richtung des zumindest einen Materialfächers 103 nach festgelegten Bedingungen als wechselnde Farben abgestrahlt werden.

## Patentansprüche

1. Verteilmaschine mit einem Rahmen (1), Vorratsbehälter (2), Dosiereinrichtung (5) und Verteilorganen (6, 102), die das auszubringende Material auf der zu bearbeitenden Oberfläche in Form von zumindest einem Materialfächer (13, 103) verteilen, wobei der Verteilmaschine den zumindest einigen Materialfächern (13, 103) anzuleuchtende Leuchtmittel (11, 104) zugeordnet sind, **dadurch gekennzeichnet, dass** die Leuchtmittel (11, 104) farbige Lichtstrahlen (12, 107) in Richtung des zumindest einen Materialfächers (13, 103) abstrahlen.

2. Verteilmaschine nach Anspruch 1, **dadurch gekennzeichnet, dass** die Leuchtmittel (11, 104) rote Lichtstrahlen abstrahlen.

3. Verteilmaschine nach Anspruch 1, **dadurch gekennzeichnet, dass** die Leuchtmittel blaue Lichtstrahlen abstrahlen.

4. Verteilmaschine nach Anspruch 1, **dadurch gekennzeichnet, dass** die Leuchtmittel (11, 104) grüne Lichtstrahlen abstrahlen.

5. Verteilmaschine nach Anspruch 1, **dadurch gekennzeichnet, dass** die Leuchtmittel (11, 104) gelbe oder orange Lichtstrahlen abstrahlen.

6. Verteilmaschine nach Anspruch 1, **dadurch gekennzeichnet, dass** die Leuchtmittel (11, 104) einen starken Kontrast zu den Umgebungsbedingungen entsprechend angepasste Lichtstrahlen abstrahlen.

7. Verteilmaschine nach einem oder mehreren der vorstehenden Ansprüche, **dadurch gekennzeichnet, dass** die von den Leuchtmitteln (11, 104) abgestrahlten Lichtstrahlen in Richtung des zumindest einen Materialfächers nach festgelegten Rückmeldung als wechselnde Farben abgestrahlt werden.

8. Verteilmaschine nach einem der vorstehenden Ansprüche, **dadurch gekennzeichnet, dass** die Verteilmaschine als Zentrifugalstreuer mit zumindest einem Vorratsbehälter zur Aufnahme von zu verteilendem, körnigem Material, der in seinem unteren Bereich zumindest ein Dosierorgan mit zumindest einem zugeordneten Einstellelement aufweist, wobei der Verteilmaschine zumindest Teile der Verteilmaschine an- und/oder beleuchtende Leuchtmittel zugeordnet sind, wobei unterhalb des zumindest einen Dosierorgans zumindest eine die von dem zumindest einem Dosierorgan dosierten Materialien in Breitverteilung und in Form eines Streufächers abschleudernde und rotierend angetriebene und mit Wurfschaufeln besetzte Schleuderscheibe angeordnet ist, ausgebildet ist, dass das zumindest eine Leuchtmittel derart ausgestaltet und/oder ausgerichtet ist, dass die von dem zu einem Leuchtmittel (11, 14 )abstrahlenden Lichtstrahlen (12) die von den Wurfschaufeln (7, 8) in einem Streufächer (13) abgeschleuderten Materialpartikel zumindest teilweise an- und/oder beleuchten.

9. Verteilmaschine nach zumindest einem der vorstehenden Ansprüche 1 bis 7, **dadurch gekennzeichnet, dass** die Verteilmaschine als Feldspritze mit einem Rahmen, Vorratsbehälter, Dosiereinrichtungen und an einem Verteilergestänge beabstandet zueinander angeordneten Verteilerdüsen (102) ausgebildet ist, dass zumindest einigen der Verteilerdüsen (102) eine von den von den Verteilerdüsen (102) ausgestoßenen Flüssigkeitsfächer (103) beleuchtendes Leuchtmittel (104) ausgebildet ist.

10. Verteilmaschine nach zumindest einem der vorstehenden Ansprüche, **dadurch gekennzeichnet, dass** das jeweilige Leuchtmittel (11, 104) eine Leuchtdiode, wie LED ist.
